# EUROPEAN PATENT SPECIFICATION

(11) **EP 0 513 603 B1**
(45) Date of publication and mention of the grant of the patent: **16.12.1998**
(21) Application number: 92107441.5
(22) Date of filing: 30.04.1992
(51) Int. Cl.: B01J 13/04, A61J 3/07

(54) **Apparatus for manufacturing seamless capsules**
Vorrichtung zum Herstellen von nahtlosen Kapseln
Appareil pour produire des capsules sans joint de soudage

(30) Priority: 14.05.1991 JP 107787/91
(43) Date of publication of application: 19.11.1992
(73) Proprietor: Freund Industrial Co., Ltd., Tokyo 160 (JP)
(72) Inventor: Takei, Narimichi, c/o Freund Industrial Co., Ltd., Tokyo (JP); Kurita, Kaoru, c/o Freund Industrial Co., Ltd., Tokyo (JP)
(74) Representative: Leyh, Hans, Dr.-Ing.

(56) References cited:
- EP-A- 0 116 311
- DE-A- 2 725 849
- FR-A- 2 228 534
- US-A- 4 615 834

## Description

This invention relates to an apparatus for manufacturing seamless capsules, and particularly to an apparatus for manufacturing seamless capsules from droplets formed by blowing a liquid flow out of a nozzle.

From US-A-4,615,834 there are known a process and an apparatus for producing microspheres of fissile and/or fertile materials with a high degree of sphericity comprising only two layers. The apparatus features known therefrom are set out in the preamble of the claim. A feed solution starter contains at least one metal salt selected from among thorium, uranium and plutonium and as a gelling medium an organic solvent is used. This organic solvent has a higher density and a greater interfacial tension with water than the feed solution and is capable of dissolving ammonia. According to one embodiment described therein small droplets from the feed solution may be formed by using external vibration. A small compartment having a thin wall made of rubber or other flexible material may be used, which is connected to a vibrator which vibrates that thin wall. This causes variations in the pressure of the feed solution which are transmitted to the top of the nozzle section so that the solution is divided into small droplets. The external hydraulic vibration system disclosed therein is positioned halfway along the feeding channel and is separated from the nozzle but forms part of a general piping connecting the tank for the feed solution and the nozzle section.

From DE-A-27 25 849 there is known an apparatus for manufacturing spherical particles from materials having a low melting point and comprising also only two layers. A supply container is connected with a discharge nozzle via a flexible hose having a small section area. This hose is surrounded by a metall guide of an electromagnetic vibration system. This electromagnetic vibrator system causes vibrations of the hose wall which is transmitted to the liquid flowing therethrough for generating uniform droplets. The number of droplets generated per second may be controlled.

Out of techniques of manufacturing capsules with no seams in coating layers thereof, i.e., seamless capsules, particularly as a technique suitable for manufacturing capsules smaller in size than an ordinary soft capsule and larger than a microcapsule, such a method is widely known that a multi-layer liquid flow is blown out into air or liquid from a multiple nozzle such as a double nozzle and a triple nozzle to form multilayer droplets, and the outermost layer liquid of the multi-layer droplets is caused to react with hardening liquid, to thereby obtain a seamless capsule, in which liquid in an inner layer is enclosed.

Furthermore, there has been used such a method that outer portions of single layer droplets, which are formed by use of a single nozzle, are solidified in hardening liquid, to thereby manufacture a seamless capsule with a single layer.

In these cases, it is usual that, in order to obtain capsules having uniform particle diameters, a liquid flow is formed into droplets while vibrations are given to capsule forming liquid.

For example, techniques of forming seamless capsules while a multiple nozzle itself is vibrated are disclosed in JP-A-Nos. 57-19032 and 59-112833.

Furthermore, a technique of vibrating a single nozzle itself is disclosed in JP-A-No. 59-112831.

Further, a technique of manufacturing seamless capsules by vibrating a ring when a liquid flow for forming seamless capsules blown out of a nozzle is caused to pass through the interior of the ring, is disclosed in JP-A-No. 53-1067 for example.

However, the inventors of the present invention have found that the above-described conventional techniques of the nozzle vibration system and the ring vibration system present the following disadvantages, respectively.

That is, as the disadvantages of the conventional nozzle vibration system, the following (1) to (3) are listed.
(1) The mass of the nozzle is large, whereby a vibrating source requires large energy and a large-sized apparatus for manufacturing seamless capsules is needed. Furthermore, for this reason, it is difficult to shut off the vibrations, whereby vibrations are transmitted to other portions, thus causing the turbulence of droplets.
(2) Unless the amplitude of vibration exceeds a certain value, the effect of vibration cannot be expected. However, it is difficult to increase the frequencies with holding the large amplitude of vibration.
(3) In an in-liquid nozzle type, it is usual that a hardening liquid system constitutes a closed system. In this case, the connection between a nozzle and a vibrator is difficult.

Next, as the disadvantage of the ring vibration system, the following (a) and (b) are listed.
(a) The flow of the hardening liquid is made turbulent by the vibrations, whereby dropping of the droplets is made turbulent, thus causing an accident that the droplets strike against the ring.
(b) Similarly to the disadvantage (3) of the above-described nozzle vibration system, the connection between the ring and the vibrator is difficult.

An object of the present invention is to provide an apparatus for manufacturing seamless capsules, in which a small-sized vibrator suffices and adverse influence of undesirable vibrations can be prevented.

Another object of the present invention is to provide an apparatus for manufacturing seamless capsules, in which the connection between the vibrator and the vibrating portion is easily made and the both members are provided close to each other.

A further object of the present invention is to provide an apparatus for manufacturing seamless capsules, in which the frequencies of the vibrated portion can be increased and seamless capsules having minute particle diameters can be manufactured.

According to the present invention there is provided an apparatus for manufacturing seamless capsules as set out in the claim.

According to the apparatus for manufacturing seamless capsules of the present invention the diaphragm-shaped flexible portion forms a part of the nozzle, such as a multiple nozzle, to which the pipings for the core liquid and the encapsulating liquid are connected. The vibrating means which is directly connected to the flexible portion will give the liquid in the nozzle very high efficient vibrations in the axial direction of the nozzle so that multi-layer droplets comprising three layers or more are formed and produced, which are blown out of the nozzle as multi-layer spheres.

### BRIEF DESCRIPTION OF THE DRAWINGS

The above and other objects and features of the present invention will become apparent when referred to the following descriptions given in conjunction with the accompanying drawings, wherein like reference numerals denote like elements, and in which:
Fig. 1 is a schematic explanatory view showing one embodiment in which the present invention is applied to the apparatus for manufacturing seamless capsules of an in-air nozzle type;
Fig. 2 is an enlarged partial view showing an embodiment of the piping vibrating construction according to the present invention; and
Fig. 3 is a schematic explanatory view showing one embodiment in which the present invention is applied to the apparatus for manufacturing seamless capsules of an in-liquid nozzle type.

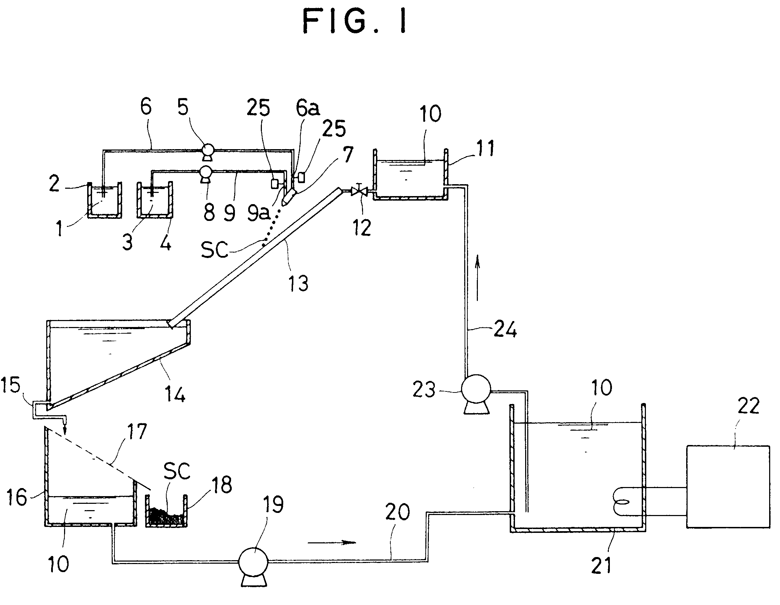

Referring to the drawings, in the apparatus for manufacturing seamless capsules of the in-air nozzle type as shown in Fig. 1, core liquid (inner layer liquid) 1 for forming the seamless capsules is stored in a core liquid tank 2 and encapsulating liquid (outer layer liquid) 3 is stored in an encapsulating liquid tank 4.

The core liquid 1 flows from the core liquid tank 2, passes through a piping 6 and is delivered under pressure to a multiple nozzle 7, while the encapsulating liquid 3 flows from the encapsulating liquid tank 4, passes through a piping 9 and is delivered under pressure to the multiple nozzle 7 by a pump 8.

Then, by vibrating means as will be described hereunder, the core liquid 1 and the encapsulating liquid 3 are blown out of the multiple nozzle 7 in the air and produced as multi-layer droplets, and dropped into hardening liquid which will be described hereunder, thus providing seamless capsules SC of multi-layer droplet type.

Furthermore, the hardening liquid 10 for solidifying the multi-layer droplets blown out of the multiple nozzle 7 for forming seamless capsules SC is stored in a hardening liquid tank 11, caused to flow out at a predetermined flow rate into an inclined groove (hardening liquid flow course) 13 having U-shaped section through a valve 12 and flows down into a recovering tank 14.

A pipe 15 is connected to a bottom portion of the recovering tank 14. The seamless capsules SC recovered into the recovering tank 14 flow together with the hardening liquid 10 out of the bottom portion of the recovering tank 14 into a separating tank 16 through the pipe 15.

A slant perforated member 17 is provided on the top of the separating tank 16. This slant perforated member 17 is of a perforated construction having perforations having dimensions not permitting the seamless capsules SC caused to flow out of the pipe 15 to pass therethrough, whereby the seamless capsules SC flowing down onto the slant perforated member 17 move on the inclined surface of the slant perforated member 17, turning around forwardly, and are recovered into a product recovering vessel 18.

On the other hand, the hardening liquid 10 flowing down from the pipe 15 onto the slant perforated member 17 passes through the perforations of the slant perforated member 17 and flows down into the separating tank 16.

The hardening liquid 10 in the separating tank 16 passes through a piping 20 and is delivered under pressure to a cooling tank 21 by a pump 19. The hardening liquid 10 in the cooling tank 21 is cooled to a predetermined temperature by a cooler 22, and thereafter, returned into the hardening liquid tank 11 through a piping 24 by a pump 23.

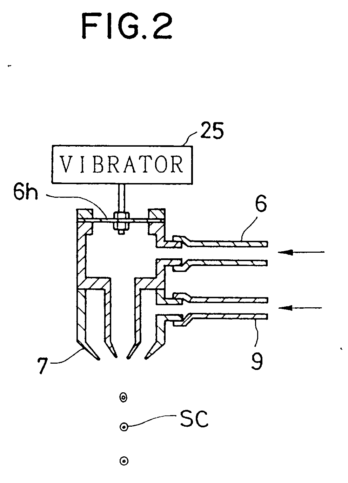

Fig. 2 is an enlarged partial view showing an embodiment of the piping vibrating construction according to the present invention.

In this embodiment, a diaphragm-shaped flexible portion 6h is directly connected to the multiple nozzle 7.

The flexible portion 6h is formed of a flexible material such for example as rubber, plastics or a thin metallic plate. A vibrator 25 is connected to this flexible portion 6h which is vibrated by the vibrator 25 at predetermined frequencies and amplitude.

In this embodiment, it is possible to give very highly efficient vibrations by the vibrating in the axial direction from the vibrator 25.

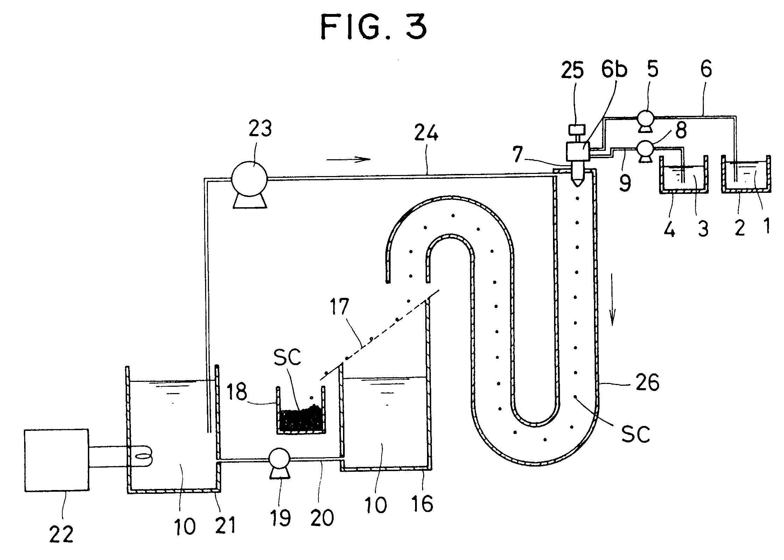

Next, Fig. 3 is the schematic explanatory view showing one embodiment in which the present invention is applied to the apparatus of the in-liquid nozzle type.

In the embodiment shown in Fig. 3, same reference characters designate elements corresponding to those in the embodiments shown in Figs. 1 and 2, so that repeated description may be omitted.

The apparatus for manufacturing seamless capsules in the embodiment shown in Fig. 3 has the construction of the in-liquid nozzle type, whereby, such an arrangement is adopted that the multiple nozzle 7 is inserted into an inlet portion of a main flow course pipe 26 consisting of a main flow course for supplying the hardening liquid 10, and the nozzle 7 blows out the core liquid 1 and the encapsulating liquid 3 into the hardening liquid 10 so that the encapsulating liquid 3 covers the whole periphery of the core liquid 1.

Further, in this embodiment, such an arrangement as shown in the embodiment of Fig. 2 is adopted that the flexible portion 6h is directly connected to the multiple nozzle 7 and vibrated by the vibrator 25.

Accordingly, in this embodiment, the core liquid 1 and the encapsulating liquid 3, which are blown out of the multiple nozzle 7, are formed into multi-layer droplets in the hardening liquid 10 in the main flow course pipe 26 by the vibrations given to the flexible portion 6h by the vibrator 25, and are solidified by the agency of the hardening liquid 10 as they flow through the main flow course pipe 26, thus forming the seamless capsules SC.

Then, the seamless capsules SC formed as described above flow down together with the hardening liquid 10 from an outlet end of the main flow course pipe 26 onto the slant perforated member 17 of the separating tank 16, and are separated from the hardening liquid 10 on the slant perforated member 17. And then, the seamless capsules SC turn around on the inclined surface of the slant perforated member 17 and are recovered into the product recovering vessel 18.

The invention has been described in detail hereinabove, however the present invention should not be limited to the above embodiments.

For example, the multiple nozzle may be a triple nozzle other than the double nozzle and various types of vibrating means necessary for producing the multi-layer droplets may be available. In the case of the multiple nozzle, at least one piping or multiple piping of the core liquid, encapsulating liquid and intermediate liquid may be vibrated.

Furthermore, any desirable ingredient or the like of the inner layer and the outer layer of the multi-layer droplets of the seamless capsule may be adopted.

Further, other constructions may be adopted as the construction of the flexible portion 6h.

The followings are the effects obtained by the invention disclosed in the present application.
(1) Since the vibrations are given to the flexible portion the mass is small as compared with the case where the vibrations are given to the nozzle, so that a small-sized vibrator suffices, thereby avoiding the occurrence of adverse effects due to the undesirable vibrations.
(2) The connection between the vibrator and the vibrating portion can be easily made and the both members can be provided close to each other.
(3) In comparison with the case where the nozzle is vibrated, the frequencies can be increased in the case where the flexible portion is vibrated, due to the presence of the flexible construction, and the seamless capsules having minute particle diameters can be produced.

## Claims

1. An apparatus for manufacturing seamless capsules (SC), wherein a liquid flow for forming the capsules is blown out of a multiple nozzle (7) connected via a piping (6) to a core liquid tank (2) and via a piping (9) to an encapsulating liquid tank (4) for forming droplets thereof and said droplets are brought into contact with hardening liquid to manufacture the seamless capsules (SC), **characterized in that** a diaphragm-shaped flexible portion (6h) is directly connected to said nozzle (7) and forming a part thereof for providing a passageway in said nozzle (7) for the core liquid and encapsulating liquid supplied by said pipings (6, 9) and a vibrating means (25) vibrates said flexible portion (6h) in axial direction of said nozzle (7) for producing multi-layer droplets blown out of said nozzle (7).

## Patentansprüche

1. Vorrichtung zur Herstellung von nahtlosen Kapseln (SC), bei der ein Flüssigkeitsstrom zur Bildung der Kapseln aus einer Mehrfachdüse (7) geblasen wird, welche über eine Leitung (6) mit einem Kernflüssigkeitsbehälter (2) und über eine Leitung (9) mit einem Einkapselungsflüssigkeitsbehälter (4) zur Ausbildung von Tropfen verbunden ist und die Tropfen in Kontakt mit der Härtungsflüssigkeit ausgebracht werden, um die nahtlosen Kapseln (SC) herzustellen, **dadurch gekennzeichnet**, daß ein membranförmiger, flexibler Abschnitt (6h) direkt mit der Düse (7) verbunden ist und einen Teil derselben zur Bildung eines Durchganges in der Düse (7) für die Kernflüssigkeit und die Einkapselungsflüssigkeit bildet, welche über die Leitungen (6, 9) zugeführt werden, und daß eine Vibriereinrichtung (25) den flexiblen Abschnitt (6h) in axialer Richtung der Düse (7) zur Erzeugung von mehrschichtigen Tropfen in Schwingung versetzt, welche aus der Düse ausgeblasen werden.

## Revendications

1. Appareil pour fabriquer des capsules sans soudure (SC), dans lequel un courant de liquide pour former les capsules est soufflé hors d'une buse multiple (7) raccordée par une tuyauterie (6) à un réservoir de liquide d'âme (2) et par l'intermédiaire d'une tuyauterie (9) à un réservoir de liquide d'encapsulage (4) pour en former des gouttelettes et lesdites gouttelettes sont amenées en contact avec un liquide de durcissement pour fabriquer des capsules sans soudure (SC), caractérisé en ce qu'une portion flexible en forme de diaphragme (6h) est directement raccordée à ladite buse (7) et en fait partie afin de procurer un passage dans ladite buse (7) pour le liquide d'âme et le liquide d'encapsulage amenés par lesdites tuyauteries (6, 9) et des moyens de vibration (25) font vibrer ladite portion flexible (6h) dans la direction axiale de ladite buse (7) pour produire des gouttelettes multicouches soufflées hors de ladite buse (7).
